# EUROPEAN PATENT SPECIFICATION

(11) **EP 2 692 479 B1**
(45) Date of publication and mention of the grant of the patent: **31.08.2016**
(21) Application number: 11862135.8
(22) Date of filing: 11.07.2011
(51) Int. Cl.: B23K 35/363, B23K 35/36, B23K 35/02, B23K 35/26, B23K 35/362

(54) **FLUX FOR SOLDERING AND SOLDER PASTE COMPOSITION**
FLUSSMITTEL ZUM LÖTEN UND LÖTPASTENZUSAMMENSETZUNG
FLUX DE BRASAGE ET COMPOSITION DE PÂTE DE BRASAGE

(30) Priority: 28.03.2011 JP 2011070175
(43) Date of publication of application: 05.02.2014
(73) Proprietor: Harima Chemicals, Inc., Kakogawa-shi, Hyogo 675-0019 (JP)
(72) Inventor: INOUE, Kousuke, Kakogawa-shi, Hyogo 675-0019 (JP); SHIGESADA, Tetsuyuki, Kakogawa-shi, Hyogo 675-0019 (JP); SHIOMI, Takumi, Kariya-shi, Aichi 448-8661 (JP); MURATA, Masao, Kariya-shi, Aichi 448-8661 (JP)
(74) Representative: Hoffmann Eitle
(86) International application number: PCT/JP2011/065791
(87) International publication number: WO 2012/132034

(56) References cited:
- EP-A1- 2 243 592
- JP-A- 10 077 380
- JP-A- H09 186 442
- JP-A- 2002 336 992
- JP-A- 2003 264 367
- JP-A- 2008 062 252
- US-A1- 2008 053 572
- AKZONOBEL: "Initiators and Reactor Additives for Thermoplastics", AkzoNobel , 31 December 2010 (2010-12-31), pages 1-37, XP002736755, Retrieved from the Internet: URL:https://www.akzonobel.com/polymer/syst em/images/AkzoNobel_Initiators_and_Reactor _Additives_for_Thermoplastics_Low-res_prot ected_July%202010_tcm96-39468.pdf [retrieved on 2015-03-04]

## Description

### TECHNICAL FIELD

The present invention relates to a flux for soldering which is used, for example, in solder connection of circuit parts or the like to a circuit board like a printed board of electronic device, and to a method for producing the same. Particularly, the present invention relates to a flux which improves fine printability of a solder paste for fine portions.

### BACKGROUND ART

Hitherto, various solder paste compositions composed of a solder powder and a flux are used for connecting electronic circuit parts or the like by solder.

By the way, a method of applying the solder paste can be broadly divided into a printing method and a discharging method. The printing method is a method in which a metal mask or a silk screen, in which pores are disposed at locations corresponding to soldering portions, is placed on a printed board and a solder paste is applied to the soldering portions through the mask or screen. On the other hand, the discharging method is a method of applying the solder paste to the soldering portions from one soldering portion to another soldering portion with a dispenser. Patterns with fine pitches have a defect that the solder paste cannot be applied by the discharging method. For example, when electronic circuit parts are connected to a circuit board with fine pitches by solder, the printing method is used.

In recent years, a high density is required also in mounting technology and devices with fine pitches are increasing in association with downsizing of electronic device. Thus, it is required that the solder paste is superior in printability (transfer property) in addition to the heretofore required characteristics (stability, reliability, etc.). The printability is, for example in the case of using a metal mask, to transfer a solder paste adhering to a wall surface of an aperture of the metal mask to a substrate with efficiency. Hitherto, in order to realize an improvement of printability, means for reducing a metal particle diameter or means for increasing a wax quantity are proposed. However, in the means for reducing a metal particle diameter, the printability is improved, but "storage stability", "wettability" and the like are poor. On the other hand, in the means for increasing a wax quantity, adjustment of viscosity is difficult, and wettability is poor.

Further, the attempt to improve characteristics (printability, etc.) of the solder paste by the components or properties of a base resin of a flux is made.

Patent Documents 1 and 2 describe use of an acrylic resin in which a glass transition temperature is limited in order to form a highly insulating flux residue not generating cracks in the flux residue after soldering. Further, Patent Documents 1 and 2 exemplify "octadecyl (meth)acrylate" as a monomer of an acrylic resin. However, Patent Documents 1 and 2 describe the need for improving the printability, but the fluxes of Patent Documents 1 and 2 do not solve the problem of printability at all.

Patent Document 3 describes use of an acrylic resin obtained by using a specific monomer obtained by reacting rosin in order to form a flux residue which does not generate cracks in the flux residue after soldering and exerts a dehumidification effect. Further, Patent Document 3 exemplifies "octadecyl (meth)acrylate" as an acrylic monomer. However, the flux of Patent Document 3 can retain the printability after storing (improvement in storage stability), but it cannot improve inherent printability.

Patent Document 4 describes that a high boiling point solvent (plasticizer) having a boiling point not lower than 150°C is used in order to form a flux film not generating microcracks in an atmosphere in which changes in temperature is severe. Further, in Patent Document 4, "isostearyl acrylate" and "stearyl methacrylate" are exemplified as the high boiling point solvent (plasticizer). However, in the flux of Patent Document 4, isostearyl acrylate is merely a solvent component and is not used as a resin component, and the flux cannot improve printability.

Patent Document 5 describes that a thermoplastic acrylic resin having a glass transition temperature less than -50°C in order to suppress cracks of a flux residue to achieve high reliability and a good soldering property. Further, Document 5 exemplifies various esters of (meth) acrylic acid as monomers of acrylic resins. However, Patent Document 5 does not describe an acrylic resin containing a long chain alkyl (meth)acrylate having a branched structure such as an iso structure as a monomer. Thus, this flux cannot improve printability.

As described above, in conventional solder pastes, it is difficult to respond to trends of higher density mounting resulting from downsizing of electronic device or the like. Accordingly, a solder paste which can realize an improvement of printability and a reduction of printing blurs in high density mounting is strongly desired.

Patent Document 6 discloses a soldering flux containing a base resin and an activating agent wherein the base resin contains a thermoplastic acrylic resin having a glass transition temperature of below -50°C.

Patent Document 7 relates to a solder bonding structure which is capable of retaining sufficient solder bonding strength and ensuring high bonding reliability even in severe environments having an extremely large temperature difference. The flux contained in the solder bonding structure contains an acrylic resin having a glass transition point not higher than -40°C or not lower than the softening temperature of the flux residue, an activating agent, and a thixotropic agent having a hydroxyl group.

Patent Document 8 is concerned with a solder paste containing fluxes which are used as resin components, an acrylic resin and two kinds of rosin resins which are at low levels and high levels in both of acid values and softening points, and in which a coincident point is not present in each of the both.

### PRIOR ART DOCUMENTS

### PATENT DOCUMENTS

Patent Document 1: Japanese Unexamined Patent Publication No. 2008-110369
Patent Document 2: Japanese Unexamined Patent Publication No. 2008-110370
Patent Document 3: Japanese Unexamined Patent Publication No. 2008-110365
Patent Document 4: Japanese Unexamined Patent Publication No. 10-075043
Patent Document 5: Japanese Unexamined Patent Publication No. 2008-062252
Patent Document 6: United States Patent Application US 2008/0053572 A1
Patent Document 7: European Patent Application EP 2 243 592 A1
Patent Document 8: Japanese Patent Application JP 2003-264367 A

### SUMMARY OF THE INVENTION

### PROBLEMS TO BE SOLVED BY THE INVENTION

It is an object of the present invention to provide a solder paste composition which improves wettability, storage stability and crack resistance in residue portions, and printability for fine portions without adhering to a squeegee when printed.

### SOLUTIONS TO THE PROBLEMS

The present inventors made earnest investigations to solve the above problem, and consequently they made it clear that the above problems can be solved by using a flux containing a thermoplastic acrylic resin obtained by polymerizing a monomer component containing a specific long chain alkyl (meth)acrylate in a solder paste.
(1) A flux for soldering, comprising a base resin and an activating agent,
   wherein the base resin comprises a thermoplastic acrylic resin having a linear polymerization arrangement and including a monomer component containing a long chain alkyl (meth)acrylate,
   the long chain alkyl moiety of the long chain alkyl (meth)acrylate has a branched structure having 12 to 23 carbon atoms, and
   the thermoplastic acrylic resin has a weight average molecular weight of 30000 or less.
(2) The flux for soldering according to the paragraph (1), wherein the long chain alkyl (meth)acrylate is isostearyl (meth)acrylate.
(3) The flux for soldering according to the paragraph (1) or (2), wherein the thermoplastic acrylic resin is a thermoplastic acrylic resin obtained by using an azo type initiator.
(4) The flux for soldering according to any one of the paragraphs (1) to (3), wherein the thermoplastic acrylic resin has a weight average molecular weight of 25000 or less.
(5) The flux for soldering according to any one of the paragraphs (1) to (4), wherein the base resin is contained in the flux in an amount of 0.5 to 80% by weight.
(6) The flux for soldering according to any one of the paragraphs (1) to (5), wherein the thermoplastic acrylic resin has a glass transition temperature of -20°C or less.
(7) A solder paste composition comprising the flux for soldering according to any one of the paragraphs (1) to (6) and a solder alloy powder.
(8) A method for producing a flux for soldering according to any one of the paragraphs (1) to (6), comprising the steps of:
   obtaining a base resin comprising a thermoplastic acrylic resin obtained by polymerizing a monomer component containing a long chain alkyl (meth)acrylate with an azo type initiator, and
   mixing the base resin with an activating agent,
   wherein the long chain alkyl moiety of the long chain alkyl (meth)acrylate has a branched structure having 12 to 23 carbon atoms, and
   wherein the thermoplastic acrylic resin has a weight average molecular weight of 30000 or less.
(9) A method for producing a solder paste composition according to paragraph (7), comprising the steps of:
   obtaining a base resin comprising a thermoplastic acrylic resin obtained by polymerizing a monomer component containing a long chain alkyl (meth)acrylate with an azo type initiator,
   obtaining a flux for soldering by mixing the base resin with an activating agent, and
   mixing the flux for soldering with a solder alloy powder,
   wherein the long chain alkyl moiety of the long chain alkyl (meth)acrylate has a branched structure having 12 to 23 carbon atoms, and
   wherein the thermoplastic acrylic resin has a weight average molecular weight of 30000 or less.

### EFFECTS OF THE INVENTION

In accordance with the present invention, the effect of enabling to improve wettability, storage stability and crack resistance in residue portions, and printability for fine portions without adhering to a squeegee when printed is achieved.

It is thought that defective printability occurs since the flux component is not applied onto a substrate electrode due to a defective slip property of the flux component on an end surface of an aperture of a printing mask. When the flux
of the present invention containing a specific thermoplastic acrylic resin is used, the slip property on the end surface of an aperture of a printing mask is improved, and therefore the printability is remarkably improved. The reason for this is that a side chain having a hydrophobic property existing in a specific thermoplastic acrylic resin improves the slip property on the end surface of an aperture of a mask. On the other hand, in a long chain normal structure, adhesion to the squeezing occurs due to an improvement of a cohesion force in a resin. Further, when the long chain alkyl moiety has more than 23 carbon atoms, since its melting point is increased and the long chain alkyl moiety is solidified at room temperature, the flux is not suitable for use. Therefore, the use of long chain alkyl (meth)acrylate of an iso structure, in which a cohesion force is small and a melting point is low, is suitable.

Further, when an azo type initiator is used as a polymerization initiator in polymerization of the thermoplastic acrylic resin, a polymer having a crosslinked structure or a multibranched structure is hardly produced, and a polymer in which monomer components are linearly polymerized is formed to enable a more improvement in the printability.

Moreover, cracks of a flux residue after soldering can be more prevented by adjusting the glass transition temperature Tg (°C) and the weight average molecular weight of the thermoplastic acrylic resin, and the content of the base resin in the flux.

### EMBODIMENTS OF THE INVENTION

Hereinafter, an embodiment of the present invention will be described in detail.

A flux for soldering of the present invention (hereinafter, may be referred to merely as a "flux") contains a base resin and an activating agent. The base resin contains a thermoplastic acrylic resin which has a weight average molecular weight of 30000 or less, and has a linear polymerization arrangement and includes a monomer component containing a long chain alkyl (meth)acrylate, the alkyl moiety of which has a branched structure having 12 to 23 carbon atoms. In the present specification, "(meth)acrylate" refers to acrylate or methacrylate.

As described above, the base resin used in the present invention contains a thermoplastic acrylic resin (hereinafter, may be referred to as a "specific thermoplastic acrylic resin") obtained by polymerizing a monomer component containing a long chain alkyl (meth)acrylate (hereinafter, may be referred to as a "specific long chain alkyl (meth) acrylate"), the alkyl moiety of which has a branched structure having 12 to 23 carbon atoms.

The specific long chain alkyl (meth)acrylate is not particularly limited as long as its alkyl moiety has a branched structure having 12 to 23 carbon atoms (C), and examples thereof include iso structure (isoalkyls), alkyls having a plurality of side chains in a main chain (for example, 2, 2-dimethyl lauryl (C14), 2,3-dimethyl lauryl (C14), 2,2-dimethyl stearyl (C20), 2,3-dimethyl stearyl (C20) and the like), and the like. These may be used singly or may be used in combination of two or more thereof. Among these, in point of improvement in printability including adhesion to a squeegee in printing, long chain alkyl (meth) acrylate is preferably that the long chain alkyl moiety is an iso structure (e.g., isolauryl (C12), isomyristyl (C14), isostearyl (C18), isobehenyl (C22), etc.), and more preferably that the long chain alkyl moiety is isostearyl (isostearyl (meth)acrylate). As described above, when the long chain alkyl moiety has more than 23 carbon atoms, since the long chain alkyl moiety is solidified at room temperature, the flux is not suitable for use.

The thermoplastic acrylic resin may be a polymer composed of only the specific long chain alkyl (meth)acrylate, or may be a copolymer containing another monomer, which can be polymerized with the long chain alkyl (meth)acrylate, as required. Examples of another monomers include short chain alkyl (meth)acrylates (hydroxyethyl (meth)acrylate, butyl (meth)acrylate, 2-ethylhexyl (meth)acrylate, etc.), and anionic monomers (acrylic acid, methacrylic acid, etc.). These monomers may be used alone, or may be used in combination of two or more thereof.

An amount of each monomer component to be used for preparing the thermoplastic acrylic resin is not particularly limited. In general, from the viewpoint of the performance of printing on fine portions, it is preferable to use a monomer component containing the specific long chain alkyl (meth)acrylate in an amount of about 20 to 100% by weight.

A method of polymerizing these monomer components is not particularly limited, and a publicly known method can be employed. For example, the above monomer component may be polymerized (radical polymerization) in the presence of a polymerization initiator, a solvent, a chain transfer agent or the like as required.

Examples of the polymerization initiator include azo type initiators which are decomposed to produce radicals such as azobisisobutyronitrile (AIBN),
azobismethylbutyronitrile (ABNE),
azobisdimethylvaleronitrile (ABNV) and the like. When the azo type initiator is used, a polymerization arrangement of the thermoplastic acrylic resin becomes linearly to enable a more improvement in the printability.

Physical properties of the thermoplastic acrylic resin thus obtained are not particularly limited. For example, cracks of the flux residue after soldering can be more prevented by adjusting the glass transition temperature Tg (°C).

The thermoplastic acrylic resin contained in the flux of the present invention has a weight average molecular weight of 30000 or less, and preferably 25000 or less. When the weight average molecular weight is more than 30000, a cohesion force in a resin increases, and therefore adhesion to a squeegee may occur.

In the flux of the present invention, the base resin may contain resins other than the specific thermoplastic acrylic resins to such an extent that the effect of the present invention is not impaired. Examples of the resins other than the specific thermoplastic acrylic resins include rosins and derivatives thereof, synthetic resins, commonly used in conventional fluxes,
and the like. Examples of the rosins include usual gum rosin, tall rosin, and wood rosin. Examples of the derivatives of rosin include polymerized rosin, acrylated rosin, hydrogenated rosin, disproportionated rosin, formylated rosin, rosin ester, rosin modified maleic resin, rosin modified phenol resin, rosin modified alkyd resin and the like. Examples of the synthetic resins include acrylic resin, styrene-maleic resin, epoxy resin, urethane resin, polyester resin, phenoxy resin, terpene resin and the like.

The content of the base resin is preferably 0.5 to 80% by weight of the total amount of the flux, and more preferably 30 to 60% by weight. When the content of the base resin is less than 0.5% by weight, there is a possibility that adequate printability may not be achieved. On the other hand, when the content of the base resin is more than 80% by weight, slumping at the time of heating is deteriorated, and generation of a solder ball may be deteriorated.

The activating agent contained in the flux of the present invention includes heretofore used activating agents. Examples of such activating agents include amines (diphenylguanidine, naphthylamine, diphenylamine, triethanolamine, monoethanolamine, etc.); amine salts (organic acid salts or inorganic acid (mineral acids such as hydrochloric acid, sulfuric acid, etc.) salts of polyamine such as ethylene diamine, and amines such as cyclohexylamine, ethylamine, diethylamine, etc.); organic acids (dicarboxylic acids such as succinic acid, adipic acid, glutaric acid, sebacic acid, maleic acid and the like; aliphatic acids such as myristic acid, palmitic acid, stearic acid, oleic acid and the like; hydroxycarboxylic acids such as lactic acid, dimethylolpropionic acid, malic acid and the like; benzoic acid, phthalic acid, trimellitic acid and the like), and amino acids (glycine, alanine, aspartic acid, glutamic acid, valine, etc.).

The content of the activating agent is not particularly limited, and it is preferably 5 to 25% by weight of the total amount of the flux. When the content of the activating agent is less than 5% by weight, an activating power is insufficient, and a soldering power may be poor. On the other hand, when the content of the activating agent is more than 25% by weight, since a film forming property of the flux is poor to become more hydrophilic, a corrosive property and an insulating property may be poor.

The flux of the present invention may contain a thixotropic agent as required in addition to the base resin and the activating agent described above. Moreover, the flux may be mixed with an appropriate organic solvent to be used in a liquid state.

Examples of the thixotropic agent include hardened castor oil, bees wax, carnauba wax, stearic acid amide, hydroxystearic acid ethylene bisamide and the like. The content of the thixotropic agent is not particularly limited, and it is preferably 1 to 8% by weight of the total amount of the flux.

Examples of the organic solvent include alcohols such as ethyl alcohol, isopropyl alcohol, ethyl cellosolve, butyl carbitol and the like; esters such as ethyl acetate, butyl acetate and the like; and hydrocarbons such as toluene, turpentine oil and the like. Among these, isopropyl alcohol is preferable in point of volatility thereof and solubility of the activating agent when the flux of the present invention is used as a liquid flux. On the other hand, when the flux of the present invention is applied to a solder paste composition, ether of polyhydric alcohols, such as butyl carbitol having a high boiling point and the like, are common and preferable.

The content of the organic solvent is preferably 10 to 30% by weight of the total amount of the organic solvent. When the content of the organic solvent is less than 10% by weight, viscosity of the flux is increased, and the ability of the flux to be applied or the printability at the time when formed into a paste composition may be poor. On the other hand, when the content of the organic solvent is more than 30% by weight, since an amount of an effective component (base resin, etc.) serving as a flux is relatively less, a soldering power may be poor.

Moreover, an antioxidant, a chelating agent, and a rust preventive agent may be added to the flux for soldering of the present invention as required to such an extent that the effect of the present invention is not impaired.

The solder paste composition of the present invention contains the flux of the present invention described above and a solder alloy powder.

The solder alloy powder is not particularly limited, and a usually used Sn-Pb alloy, or a Sn-Pb alloy including silver, bismuth or indium further added can be used. Further, in consideration of environmental impact, Pb-free alloys such as Sn-Ag type alloys, Sn-Cu type alloys and Sn-Ag-Cu alloys are preferable. In addition, a particle diameter of the solder alloy powder is preferably about 10 to 40 µm.

A weight ratio between the flux and the solder alloy powder (flux : solder alloy powder) in the solder paste composition of the present invention may be appropriately set according to the use or function of the solder paste, and the weight ratio is not particularly limited, but it is preferably about 8 : 92 to 15 : 85.

The solder paste composition of the present invention is applied onto a substrate by a dispenser or screen printing when connecting electronic device parts by solder. Then, after applying the paste, pre-heating is performed, for example, at about 150 to 200°C, and reflow is performed at a maximum temperature of about 170 to 250°C. Application onto the substrate and reflow may be performed in the air or may be performed in an inert gas atmosphere of nitrogen, argon or helium.

### EXAMPLES

Hereinafter, the present invention will be described specifically based on Examples and Comparative Examples. However, the present invention is not limited to the following examples.

### (Synthesis Example 1) Synthesis of Thermoplastic Acrylic Resin

In a reaction container (flask made of glass) provided with a thermometer and a nitrogen inlet tube, 30 parts by weight of hexyl carbitol was put as a solvent, and the hexyl carbitol was heated to 90°C while being stirred in a nitrogen atmosphere. Then, 40 parts by weight of isostearyl methacrylate (i-C18), 15 parts by weight of lauryl methacrylate (C12) and 15 parts by weight of tridecyl methacrylate (C13) as monomer components, and 5 parts by weight of azobisisobutyronitrile (AIBN) as a polymerization initiator were mixed to prepare a monomer solution. The monomer solution was added dropwise to the reaction container over two hours to react with the resulting mixture at 90°C. After all of the monomer solution was added dropwise, the mixture in the reaction container was heated at 90°C for 2 hours to obtain a thermoplastic acrylic resin (resin A, weight average molecular weight: 15000).

### (Reference Synthesis Example 2) Synthesis of Thermoplastic Acrylic Resin

A thermoplastic acrylic resin (resin B, weight average molecular weight: 15000) was prepared by following the same procedure as in Synthesis Example 1 except for using 5 parts by weight of a peroxide type polymerization initiator (t-butyl peroxybenzoate) in place of AIBN as a polymerization initiator.

### (Synthesis Example 3) Synthesis of Thermoplastic Acrylic Resin

A thermoplastic acrylic resin (resin C, weight average molecular weight: 15000) was prepared by following the same procedure as in Synthesis Example 1 except for using 70 parts by weight of isostearyl methacrylate (i-C18) as a monomer component.

### (Synthesis Example 4) Synthesis of Thermoplastic Acrylic Resin

A thermoplastic acrylic resin (resin D, weight average molecular weight: 25000) was prepared by following the same procedure as in Synthesis Example 1 except for using 4 parts by weight of the polymerization initiator (AIBN).

### (Comparative Synthesis Example 1) Synthesis of Thermoplastic Acrylic Resin

A thermoplastic acrylic resin (resin E, weight average molecular weight: 15000) was prepared by following the same procedure as in Synthesis Example 1 except for using 20 parts by weight of 2-ethylhexyl methacrylate (C8), 25 parts by weight of lauryl methacrylate (C12) and 25 parts by weight of tridecyl methacrylate (C13) as monomer components.

### (Comparative Synthesis Example 2) Synthesis of Thermoplastic Acrylic Resin

A thermoplastic acrylic resin (resin F, weight average molecular weight: 8000) was prepared by following the same procedure as in Synthesis Example 1 except for using 15 parts by weight of lauryl methacrylate (C12), 15 parts by weight of tridecyl methacrylate (C13) and 40 parts by weight of stearyl methacrylate (C18) as monomer components.

### (Comparative Synthesis Example 3) Synthesis of Thermoplastic Acrylic Resin

A thermoplastic acrylic resin (resin G, weight average molecular weight: 15000) was prepared by following the same procedure as in Synthesis Example 1 except for using 70 parts by weight of 2-ethylhexyl methacrylate (C8) as a monomer component.

### (Comparative Synthesis Example 4) Synthesis of Thermoplastic Acrylic Resin

A thermoplastic acrylic resin (resin H, weight average molecular weight: 40000) was prepared by following the same procedure as in Synthesis Example 1 except for using 3 parts by weight of the polymerization initiator (AIBN).

### (Comparative Synthesis Example 5) Synthesis of Thermoplastic Acrylic Resin

A thermoplastic acrylic resin (resin I, weight average molecular weight: 15000) was prepared by following the same procedure as in Synthesis Example 1 except for using 30 parts by weight of isobornyl acrylate and 40 parts by weight of cyclohexyl acrylate as monomer components.

### (Example 1)

The resin A obtained in Synthesis Example 1 (40 parts by weight) as a base resin, sebacic acid (10 parts by weight) as an activating agent, and wax (5 parts by weight) as a thixotropic agent were mixed to prepare a flux. Then, the flux and a solder alloy powder (Sn-Ag-Cu type alloy: particle diameter 25 to 38 µm) were mixed at a weight ratio of 10 : 90 to obtain a solder paste.

### (Reference Example 2 and Examples 3 and 4)

The base resins illustrated in Table 1 (resin B to resin D respectively obtained in Reference Synthesis Example 2 and Synthesis Examples 3 and 4), an activating agent and a thixotropic agent were mixed in the proportions illustrated in Table 1 to prepare fluxes, respectively. The prepared fluxes and a solder alloy powder were respectively mixed at weight ratios illustrated in Table 1 to obtain solder pastes, respectively.

### (Comparative Examples 1 to 5)

The base resins illustrated in Table 1 (resin E to resin I, respectively obtained in Comparative Synthesis Examples 1 to 5), an activating agent and a thixotropic agent were mixed in the proportions illustrated in Table 1 to prepare fluxes, respectively. The prepared fluxes and a solder alloy powder were respectively mixed at weight ratios illustrated in Table 1 to obtain solder pastes, respectively.

Using the solder paste obtained in each of Examples and Comparative Examples, printability and adhesion to a squeegee were investigated. The results of the investigations are illustrated in Table 1. In addition, the printability and the adhesion to a squeegee were evaluated in the following manner.

### <Printability>

A substrate for printability evaluation (glass epoxy substrate having a 0.5mm pitch BGA with 10 × 10 pins and a 0.25 mm aperture pattern) was used, a corresponding mask having a thickness of 150 µm was used, and the ability of continuous printing of 20 sheets of the substrates was rated according to the following criteria.
ⓞ: All of 10 × 10 pins are printed in every substrate.
○: A number of to ten percent of 10 × 10 pins are not printed in every substrate.
Δ: Ten percent of to fifty percent of 10 × 10 pins are not printed in every substrate.
×: Fifty percent of to eighty percent of 10 × 10 pins are not printed in every substrate.
××: Eighty percent or more of 10 × 10 pins are not printed in every substrate.

### <Adhesion to squeegee>

In continuous printing of 20 sheets of the substrates in the above printability test, visual evaluation as to whether print fades due to the adhesion of a solder paste to squeegee portions in a printing machine or not was performed according to the following criteria.
○: After printing 20 sheets, print does not fade due to the adhesion to squeegees.
Δ: After printing 20 sheets, print fades slightly due to the adhesion to squeegees.
×: After printing 20 sheets, print fades evidently due to the adhesion to squeegees.

**Table 1**

| | Flux | | | | | | Solder alloy powder (particle diameter:µm) | Weight ratio of flux and solder alloy powder | Evaluation | |
|---|---|---|---|---|---|---|---|---|---|---|
| | Base resin | | | | Activating agent (parts by weight) | Thixotropic agent (parts by weight) | | | Printability | Adhesion to squeegee |
| | Monomer component | Polymerization initiator (parts by weight) | Molecular weight | Resin (parts by weight) | | | | | | |
| Example 1 | i-C18(40) | AIBN (5) | 15000 | Resin A (40) | Sebacic acid (10) | Wax (5) | Sn-Ag-Cu type (25∼38) | 10:90 | ⓞ | ○ |
| | C12(15) | | | | | | | | | |
| | C13(15) | | | | | | | | | |
| Reference Example 2 | i-C18(40) | t-butyl peroxybenzoate (5) | 15000 | Resin B (40) | Sebacic acid (10) | Wax (5) | Sn-Ag-Cu type (25∼38) | 10:90 | ○ | ○ |
| | C12(15) | | | | | | | | | |
| | C13(15) | | | | | | | | | |
| Example 3 | i-C18(70) | AIBN (5) | 15000 | Resin C (40) | Sebacic acid (10) | Wax (5) | Sn-Ag-Cu type (25∼38) | 10:90 | ⓞ | ○ |
| Example 4 | i-C18(40) | AIBN (4) | 25000 | Resin D (40) | Sebacic acid (10) | Wax (5) | Sn-Ag-Cu type (25∼38) | 10:90 | ⓞ | ○ |
| | C12(15) | | | | | | | | | |
| | C13(15) | | | | | | | | | |
| Comparative Example 1 | C8(20) | AIBN (5) | 15000 | Resin E (40) | Sebacic acid (10) | Wax (5) | Sn-Ag-Cu type (25∼38) | 10:90 | Δ | Δ |
| | C12(25) | | | | | | | | | |
| | C13(25) | | | | | | | | | |
| Comparative Example 2 | C12(15) | AIBN (5) | 8000 | Resin F (40) | Sebacic acid (10) | Wax (5) | Sn-Ag-Cu type (25∼38) | 10:90 | Δ | Δ |
| | C13(15) | | | | | | | | | |
| | C18(40) | | | | | | | | | |
| Comparative Example 3 | C8(70) | AIBN (5) | 15000 | Resin G (40) | Sebacic acid (10) | Wax (5) | Sn-Ag-Cu type (25∼38) | 10:90 | × | Δ |
| Comparative Example 4 | i-C18(40) | AIBN (3) | 40000 | Resin H (40) | Sebacic acid (10) | Wax (5) | Sn-Ag-Cu type (25∼38) | 10:90 | Δ | × |
| | C12(15) | | | | | | | | | |
| | C13(15) | | | | | | | | | |
| Comparative Example 5 | IBXA(30) | AIBN (5) | 15000 | Resin I (40) | Sebacic acid (10) | Wax (5) | Sn-Ag-Cu type (25∼38) | 10:90 | × × | Δ |
| | CHA(40) | | | | | | | | | |

| | | | | | | | | | | |
|---|---|---|---|---|---|---|---|---|---|---|
| C8: 2-ethylhexyl methacrylate, C12:Lauryl methacrylate, C13:Tridecyl methacrylate. C18:Stearyl metacrylate, i-C18:Isostearyl metacrylate, IBXA:Isobornyl acrylate, CHA:Cyclohexyl acrylate AIBN: Azobisisobutyronitrile Numbers in parenthesis in "monomer component" are ratios of each component (parts by weight) in the "monomer component'. | | | | | | | | | | |

As illustrated in Table 1, it was found that when the solder pastes of Examples 1, 3 and 4 were used, the paste is excellent in printability and does not adhere to the squeegee. On the other hand, it was found that when the solder pastes of Comparative Examples 1 to 5 were used, the paste is poor in at least either printability or adhesion to the squeegee.

## Claims

1. A flux for soldering, comprising a base resin and an activating agent,
wherein the base resin comprises a thermoplastic acrylic resin having a linear polymerization arrangement and including a monomer component containing a long chain alkyl (meth)acrylate,
the long chain alkyl moiety of the long chain alkyl (meth) acrylate has a branched structure having 12 to 23 carbon atoms, and
the thermoplastic acrylic resin has a weight average molecular weight of 30000 or less.

2. The flux for soldering according to claim 1, wherein the long chain alkyl (meth)acrylate is isostearyl (meth)acrylate.

3. The flux for soldering according to claim 1 or 2, wherein the thermoplastic acrylic resin is a thermoplastic acrylic resin obtained by using an azo type initiator.

4. The flux for soldering according to any one of claims 1 to 3, wherein the thermoplastic acrylic resin has a weight average molecular weight of 25000 or less.

5. The flux for soldering according to any one of claims 1 to 4, wherein the base resin is contained in the flux in an amount of 0.5 to 80% by weight.

6. The flux for soldering according to any one of claims 1 to 5, wherein the thermoplastic acrylic resin has a glass transition temperature of -20°C or less.

7. A solder paste composition comprising the flux for soldering according to any one of claims 1 to 6 and a solder alloy powder.

8. A method for producing a flux for soldering according to any one of claims 1 to 6, comprising the steps of:
obtaining a base resin comprising a thermoplastic acrylic resin obtained by polymerizing a monomer component containing a long chain alkyl (meth)acrylate with an azo type initiator, and
mixing the base resin with an activating agent,
wherein the long chain alkyl moiety of the long chain alkyl (meth)acrylate has a branched structure having 12 to 23 carbon atoms, and
wherein the thermoplastic acrylic resin has a weight average molecular weight of 30000 or less.

9. A method for producing a solder paste composition according to claim 7, comprising the steps of:
obtaining a base resin comprising a thermoplastic acrylic resin obtained by polymerizing a monomer component containing a long chain alkyl (meth)acrylate with an azo type initiator,
obtaining a flux for soldering by mixing the base resin with an activating agent, and
mixing the flux for soldering with a solder alloy powder,
wherein the long chain alkyl moiety of the long chain alkyl (meth)acrylate has a branched structure having 12 to 23 carbon atoms, and
wherein the thermoplastic acrylic resin has a weight average molecular weight of 30000 or less.

## Patentansprüche

1. Flussmittel zum Löten, umfassend ein Basisharz und ein Aktivierungsmittel,
wobei das Basisharz ein thermoplastisches Acrylharz umfasst, das eine lineare Polymerisationsanordnung aufweist und eine Monomerkomponente einschließt, die ein langkettiges Alkyl(meth)acrylat enthält,
der langkettige Alkylrest des langkettigen Alkyl(meth)acrylats eine verzweigte Struktur mit 12 bis 23 Kohlenstoffatomen aufweist und
das thermoplastische Acrylharz ein gewichtsgemitteltes Molekulargewicht von 30.000 oder weniger aufweist.

2. Flussmittel zum Löten gemäß Anspruch 1, wobei das langkettige Alkyl(meth)acrylat Isostearyl(meth)acrylat ist.

3. Flussmittel zum Löten gemäß Anspruch 1 oder 2, worin das thermoplastische Acrylharz ein thermoplastisches Acrylharz ist, das unter Verwendung eines Initiators vom Azo-Typ erhalten wird.

4. Flussmittel zum Löten gemäß irgendeinem der Ansprüche 1 bis 3, wobei das thermoplastische Acrylharz ein gewichtsgemitteltes Molekulargewicht von 25.000 oder weniger aufweist.

5. Flussmittel zum Löten gemäß irgendeinem der Ansprüche 1 bis 4, wobei das Basisharz in dem Flussmittel in einer Menge von 0,5 bis 80 Gew.% enthalten ist.

6. Flussmittel zum Löten gemäß irgendeinem der Ansprüche 1 bis 5, wobei das thermoplastische Acrylharz eine Glasübergangstemperatur von -20°C oder niedriger aufweist.

7. Lötpastenzusammensetzung, umfassend das Flussmittel zum Löten gemäß irgendeinem der Ansprüche 1 bis 6 und ein Lötlegierungspulver.

8. Verfahren zur Herstellung eines Flussmittels zum Löten gemäß irgendeinem der Ansprüche 1 bis 6, umfassend die folgenden Schritte:
Erhalten eines Basisharzes, umfassend ein thermoplastisches Acrylharz, das durch Polymerisieren einer Monomerkomponente, die ein langkettiges Alkyl(meth)acrylat enthält, mit einem Initiator vom Azo-Typ erhalten wird, und
Mischen des Basisharzes mit einem Aktivierungsmittel,
wobei der langkettige Alkylrest des langkettigen Alkyl(meth)acrylats eine verzweigte Struktur mit 12 bis 23 Kohlenstoffatomen aufweist und
wobei das thermoplastische Acrylharz ein gewichtsgemitteltes Molekulargewicht von 30.000 oder weniger aufweist.

9. Verfahren zur Herstellung einer Lötpastenzusammensetzung gemäß Anspruch 7, umfassend die folgenden Schritte:
wobei das Basisharz ein thermoplastisches Acrylharz umfasst, das eine lineare Polymerisationsanordnung aufweist und eine Monomerkomponente einschließt, die ein langkettiges Alkyl(meth)acrylat mit einem Azo-Typ-Initiator enthält,
Erhalten eines Flussmittels zum Löten durch Mischen des Basisharzes mit einem Aktivierungsmittel und
Mischen des Flussmittels zum Löten mit einem Lötlegierungspulver,
wobei der langkettige Alkylrest des langkettigen Alkyl(meth)acrylats eine verzweigte Struktur mit 12 bis 23 Kohlenstoffatomen aufweist und
wobei das thermoplastische Acrylharz ein gewichtsgemitteltes Molekulargewicht von 30.000 oder weniger aufweist.

## Revendications

1. Flux de brasage, comprenant une résine de base et un agent d'activation,
dans lequel la résine de base comprend une résine acrylique thermoplastique ayant une configuration de polymérisation linéaire et comprenant un composant monomère contenant un alkyl(méth)acrylate à longue chaîne,
la fraction alkyle à longue chaîne de l'alkyl(méth)acrylate à longue chaîne a une structure ramifiée ayant 12 à 23 atomes de carbone, et
la résine acrylique thermoplastique a une masse moléculaire moyenne en poids de 30 000 ou moins.

2. Flux de brasage selon la revendication 1, dans lequel l'alkyl(méth)acrylate à longue chaîne est un isostéaryl(méth)acrylate.

3. Flux de brasage selon la revendication 1 ou 2, dans lequel la résine acrylique thermoplastique est une résine acrylique thermoplastique obtenue en utilisant un initiateur de type azoïque.

4. Flux de brasage selon l'une quelconque des revendications 1 à 3, dans lequel la résine acrylique thermoplastique a une masse moléculaire moyenne en poids de 25 000 ou moins.

5. Flux de brasage selon l'une quelconque des revendications 1 à 4, dans lequel la résine de base est contenue dans le flux en une quantité de 0,5 à 80 % en poids.

6. Flux de brasage selon l'une quelconque des revendications 1 à 5, dans lequel la résine acrylique thermoplastique a une température de transition vitreuse de -20 °C ou moins.

7. Composition de pâte de brasage comprenant le flux de brasage selon l'une quelconque des revendications 1 à 6 et une poudre d'alliage de brasage.

8. Procédé de production d'un flux de brasage selon l'une quelconque des revendications 1 à 6, comprenant les étapes :
d'obtention d'une résine de base comprenant une résine acrylique thermoplastique obtenue par polymérisation d'un composant monomère contenant un alkyl(méth)acrylate à longue chaîne avec un initiateur de type azoïque, et
de mélange de la résine de base avec un agent d'activation,
dans lequel la fraction alkyle à longue chaîne de l'alkyl(méth)acrylate à longue chaîne a une structure ramifiée ayant 12 à 23 atomes de carbone, et
dans lequel la résine acrylique thermoplastique a une masse moléculaire moyenne en poids de 30 000 ou moins.

9. Procédé de production d'une composition de pâte de brasage selon la revendication 7, comprenant les étapes :
d'obtention d'une résine de base comprenant une résine acrylique thermoplastique obtenue par polymérisation d'un composant monomère contenant un alkyl(méth)acrylate à longue chaîne avec un initiateur de type azoïque,
d'obtention d'un flux de brasage par mélange de la résine de base avec un agent d'activation, et
de mélange du flux de brasage avec une poudre d'alliage de brasage,
dans lequel la fraction alkyle à longue chaîne de l'alkyl(méth)acrylate à longue chaîne a une structure ramifiée ayant 12 à 23 atomes de carbone, et
dans lequel la résine acrylique thermoplastique a une masse moléculaire moyenne en poids de 30 000 ou moins.
